# EUROPÄISCHE PATENTSCHRIFT

(11) **EP 1 914 372 B1**
(45) Veröffentlichungstag und Bekanntmachung des Hinweises auf die Patenterteilung: **06.05.2015**
(21) Anmeldenummer: 07117392.6
(22) Anmeldetag: 27.09.2007
(51) Int. Cl.: E05F 15/632, E05D 15/06, F16C 29/06, B60J 5/06, B61D 19/00

(54) **Als Schiebetür oder Schwenkschiebetür ausgebildete Fahrgasttür für Fahrzeuge des öffentlichen Personenverkehrs**
Passenger door designed as a sliding door or pivotable sliding door for public transport vehicles
Porte passager développée en tant que porte coulissante ou porte coulissante pivotante pour véhicules du transport en commun

(30) Priorität: 13.10.2006 DE 202006015735 U
(43) Veröffentlichungstag der Anmeldung: 23.04.2008
(73) Patentinhaber: Gebr. Bode GmbH & Co. KG, 34123 Kassel (DE)
(72) Erfinder: Pellegrini, Andreas, 34590 Wabern (DE); Arend, Ulrich, 34576 Homburg (DE)
(74) Vertreter: Bauer, Wulf

(56) Entgegenhaltungen:
- EP-A1- 0 644 074
- EP-A1- 0 876 945
- EP-A1- 1 195 280
- DE-A1- 2 030 799

## Beschreibung

Die Erfindung betrifft eine als Schiebetür oder Schwenkschiebetür ausgebildete Fahrgasttür für Fahrzeuge des öffentlichen Personenverkehrs mit den Merkmalen aus dem Oberbegriff des Schutzanspruchs 1.

Derartige Fahrgasttüren sind an sich bekannt und beispielsweise in EP 1 314 626 A1 oder EP 0 876 945 A1 beschrieben. EP 0 876 945 A1 offenbart eine als Schiebetür oder Schwenkschiebetür ausgebildete Fahrgasttür für Fahrzeuge des öffentlichen Personenverkehrs mit mindestens einem in seiner Längsrichtung verschiebbaren Türblatt, das in einer Tragführung aufgehängt und verschiebbar geführt ist, wobei die Tragführung eine Linearführung aufweist mit einer Führungsschiene, an welcher ein Führungsschlitten geführt ist, an dem über einen Tragarm das Türblatt aufgehängt ist, die Linearführung ein Kugelumlauflager aufweist, bei dem zwei nebeneinanderliegende und in je zwei Paar einander gegenüberliegenden Laufbahnen der Führungsschiene und eines in die Führungsschiene eingreifenden Läufers gelagerte Kugelreihen die Traglast zwischen der feststehenden Führungsschiene und dem planparallel hierzu bewegbaren, den Führungsschlitten tragenden Läufer aufnehmen.

Ein bei derartigen Fahrgasttüren auftretendes Problem besteht darin, dass der innerhalb des Türportals oberhalb der Türblätter zur Verfügung stehende Einbauraum für den Türantrieb äußerst begrenzt ist. Dies hat zur Folge, dass die für die Aufhängung und Führung sowie den Antrieb der Türblätter notwendigen Vorrichtungen und Bauelemente mit einem möglichst kleinen Bauvolumen ausgestattet sein sollen. Trotzdem müssen sie in der Lage sein, sämtliche Belastungen, die durch das Gewicht und die Bewegung der Türblätter entstehen, aufzunehmen und es muss eine sichere Führung der Türblätter gewährleistet sein.

Der Erfindung liegt die Aufgabe zugrunde, ausgehend von der im Oberbegriff des Schutzanspruchs 1 beschriebenen Fahrgasttür, die Linearführung der Tragführung so auszubilden, dass bei äußerst geringem Bauraum sehr große Tragmöglichkeiten und eine optimale Führung erreicht werden. Weiterhin sollte die Linearführung so ausgebildet sein, dass ein optimaler Schutz gegen eindringenden Staub oder Feuchtigkeit erzielbar ist.

Die Lösung dieser Aufgabe erfolgt erfindungsgemäß mit den Merkmalen aus dem kennzeichnenden Teil des Schutzanspruchs 1. Vorteilhafte Weiterbildungen der erfindungsgemäßen Fahrgasttür sind in den abhängigen Ansprüchen beschrieben.

Der Grundgedanke der Erfindung besteht darin, als Linearführung ein Kugelumlauflager einzusetzen, das grundsätzlich bekannt und in der älteren, aber nicht vorveröffentlichten, deutschen Patentanmeldung Nr. 10 2006 016 615.9-12 beschrieben ist. Wie weiter unten anhand eines Ausführungsbeispiels beschrieben, bringt der Einsatz dieses Kugelumlauflagers an der Tragführung einer Fahrgasttür ganz außerordentliche Vorteile mit sich.

Dadurch, dass im Gegensatz zu anderen bekannten linearen Kugelumlaufführungen die Kugelreihen nicht außen um die Führungsschiene herumgeführt werden, sondern durch im Läufer vorgesehene Kanäle zurücklaufen und die Umlenkebenen sich schneiden und die Umlenkführungen hintereinander angeordnet sind, gelingt es, die Abmessung des Läufers wesentlich zu verkleinern. Weiterhin ist es möglich, die beiden Führungsschienen für eine Fahrgasttür mit zwei Türblättern übereinanderliegend an einer Seite eines Antriebsträgers der Tragführung anzuordnen und ohne großen Platzaufwand die Führungsschlitten an den Führungsschienen in unterschiedlichen horizontalen Ebenen anzuordnen.

Schließlich können die Türflügel an den Tragarmen der Führungsschlitten jeweils über ein Drehgelenk mit horizontaler, parallel zur Führungsschiene verlaufender Drehachse pendelnd aufgehängt sein, was den Vorteil mit sich bringt, dass unabhängig von der Ausführung des jeweiligen Türblattes, die eben oder gewölbt sein kann, dieselben Bauteile verwendet werden können. Weiterhin werden durch diese Art der Aufhängung der Türblätter Toleranzen zur unteren Türführung hin ausgeglichen. So bleibt das Drehmoment, das um die Längsachse der Führungsschiene wirkt, konstant und bleibt unbeeinflusst von etwaigen Verspannungen des Türblatts.

Das Kugelumlauflager kann sehr unterschiedliche und in der älteren Patentanmeldung Nr. 102006016615.9-12 ausführlich beschriebene Ausgestaltungen aufweisen. So ist es beispielsweise besonders vorteilhaft für die Platzersparnis, wenn die Umlenkebenen sich schneiden und die Umlenkführungen hintereinander angeordnet sind. Dabei kann der Winkel zwischen den Umlenkebenen und der durch zwei benachbarte Laufbahnen der Führungsschiene gebildeten Ebene 30 bis 70° betragen. In vorteilhafter Weise kann die Führungsschiene aus einem U- oder C-förmigen Profil bestehen und jeder Schenkel des Profils ein Paar innenliegende und aufeinander zugerichtete Laufbahnen aufweisen. Der an der Führungsschiene verschiebbar gelagerte Läufer kann an seiner in die Führungsschiene eingreifenden Seite zwei den Laufbahnen der Führungsschiene zugewandte kongruente Paare von Laufbahnen aufweisen und zwischen diesen Laufbahnen können die Kugelreihen angeordnet sein.

Im Folgenden wird anhand der beigefügten Zeichnungen ein Ausführungsbeispiel für eine Fahrgasttür nach der Erfindung näher erläutert. In den Zeichnungen zeigen:
Fig. 1 in einer perspektivischen Darstellung von außen gesehen, die Tragführung für eine Schwenkschiebetür mit zwei Türblättern im geschlossenen Zustand der Tür;
Fig. 2 die Ansicht der Tragführung nach Fig. 1 in einer Ansicht von außen;
Fig. 3 einen Schnitt nach der Linie C-C in Fig. 2;
Fig. 4 in perspektivischer Darstellung eine der Führungsschienen der Tragführung nach Figuren 1 bis 3 mit eingesetztem Läufer;
Fig. 5 in einer gegenüber Fig. 4 vergrößerten perspektivischen Teildarstellung ein Ende des in die Führungsschiene eingesetzten Läufers;
Fig. 6 einen Querschnitt durch Läufer und Führungsschiene nach Fig. 5.

Die in den Zeichnungen dargestellte Schwenkschiebetür ist als zweiflügelige Tür ausgebildet, wobei aber die Türblätter selbst in den Figuren nicht dargestellt sind. Die Tragführung ist zum Einbau in die Portalöffnung eines nicht dargestellten Fahrzeugs des öffentlichen Personenverkehrs bestimmt.

Zur Aufhängung der Tür ist in den oberen Bereich des nicht dargestellten Türportals eine Tragplatte 13 mit Seitenwangen 6.1 und 6.2 eingesetzt. Die Befestigung der Tragplatte 13 im nicht dargestellten Türportal erfolgt über Halterungen 8.1 und 8.2.

An den Seitenwangen 6.1 und 6.2 sind an der Innenseite Querrührungen 7.1 und 7.2 angeordnet. Die Tragführung selbst besitzt einen sich über nahezu die volle Breite der Türöffnung erstreckenden Antriebsträger 2, der an seinen beiden Enden Rahmenteile 2.1 und 2.2 aufweist, die jeweils über Rollen in den Querführungen 7.1 und 7.2 laufen, so dass der Antriebsträger 2 in horizontaler Richtung quer zu seiner Längsrichtung bewegbar ist.

An der Außenseite des Antriebsträgers 2 sind übereinander liegend die Führungsschienen 1A und 1B einer weiter unten genauer beschriebenen Längsführung angeordnet, an welcher Führungsschlitten 3A und 3B in Längsrichtung verschiebbar geführt sind. Wie aus den Zeichnungen zu ersehen, befinden sich die Führungsschlitten 3A und 3B in unterschiedlichen horizontalen Ebenen.

Die Führungsschlitten 3A und 3B besitzen Tragarme 4A bzw. 4B, an denen über Drehgelenke 4.1 A bzw. 4.1B mit horizontaler parallel zur Führungsschiene verlaufender Drehachse Türblatthalterungen 5A bzw. 5B pendelnd aufgehängt sind, an welchen die nicht dargestellten Türblätter befestigt werden können.

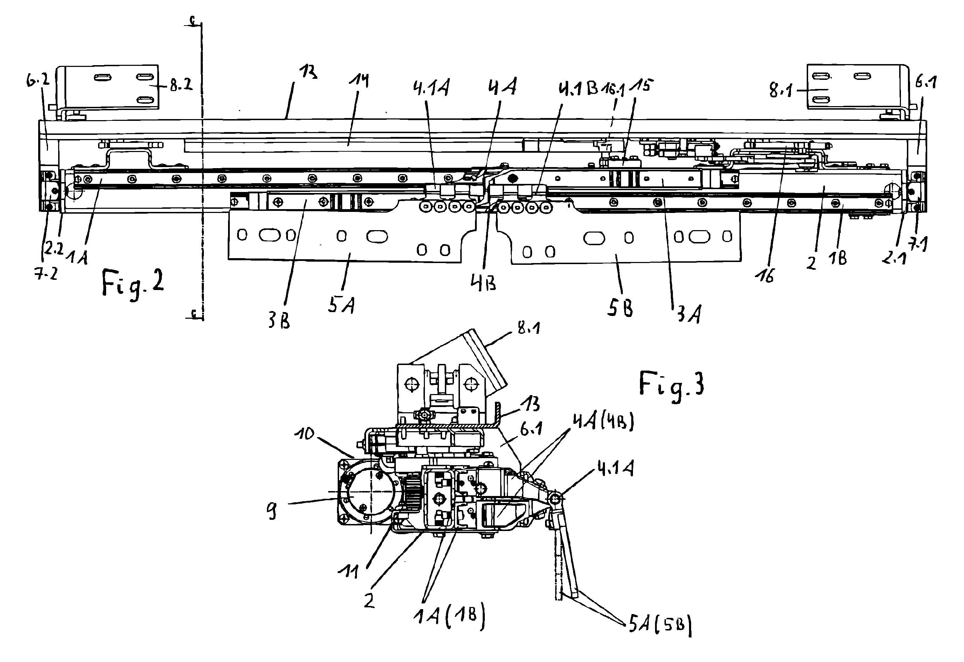

Als Antriebsvorrichtung dient bei der dargestellten Ausführungsform ein an einem Ende der Tragführung angeordneter Elektromotor 9 (Fig. 3). der über ein Planetengetriebe 10 einen Zahnriemen 11 antreibt. Ein derartiger Antrieb ist beispielsweise in der älteren, nicht vorveröffentlichten, deutschen Gebrauchsmusteranmeldung Nr. 202005015168.8 näher erläutert.

Selbstverständlich kann als Türantrieb auch ein anderer Antrieb beispielsweise mittels eines Pneumatikzylinders und/oder ein Spindelantrieb verwendet werden.

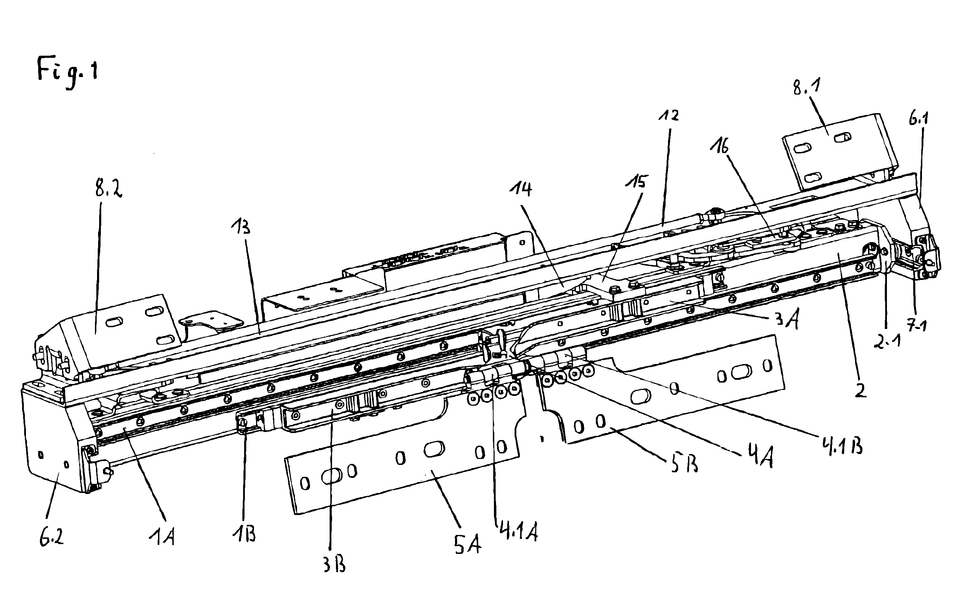

Beim dargestellten Ausführungsbeispiel ist der Zahnriemen 11 über Mitnehmer mit den Führungsschlitten 3A und 3B derart gekoppelt, dass diese in gegenläufiger Bewegung in Längsrichtung angetrieben werden. Wie aus Fig. 1 und 2 ersichtlich, trägt der Mitnehmer 15 noch eine Führungsrolle 15.1, die in eine an der Tragplatte 13 angeordnete Schienenführung 14 eingreift und somit die Ausschwenkbewegung der Türblätter koordiniert. Durch die Längsbewegung des Führungsschlittens 3A verschiebt sich die Führungsrolle 15.1 samt Mitnehmer 15 in der Schienenführung 14. Am Ende der Schließbewegung bzw. zu Beginn der Öffnungsbewegung läuft die Führungsrolle in einem nach innen gekrümmten Teil, wodurch die koordinierte Querverschiebung des Antriebsträgers 2 erzeugt wird.

Das Türsystem wird im geschlossenen Zustand mittels einer Verriegelungseinrichtung 16 verriegelt, welche über eine Koppelstange 12 betätigt wird, die mit dem beweglich gelagerten Gehäuse des Motors 9 gekoppelt ist. Somit wird die Verriegelung mittels einer Kraft bewirkt, die aus der Reaktionskraft des Motors abgeleitet ist. Dies wird im Folgenden nicht näher beschrieben und ist in der älteren, nicht vorveröffentlichten, deutschen Gebrauchsmusteranmeldung Nr. 20 2005 015 169.6 ausführlich beschrieben.

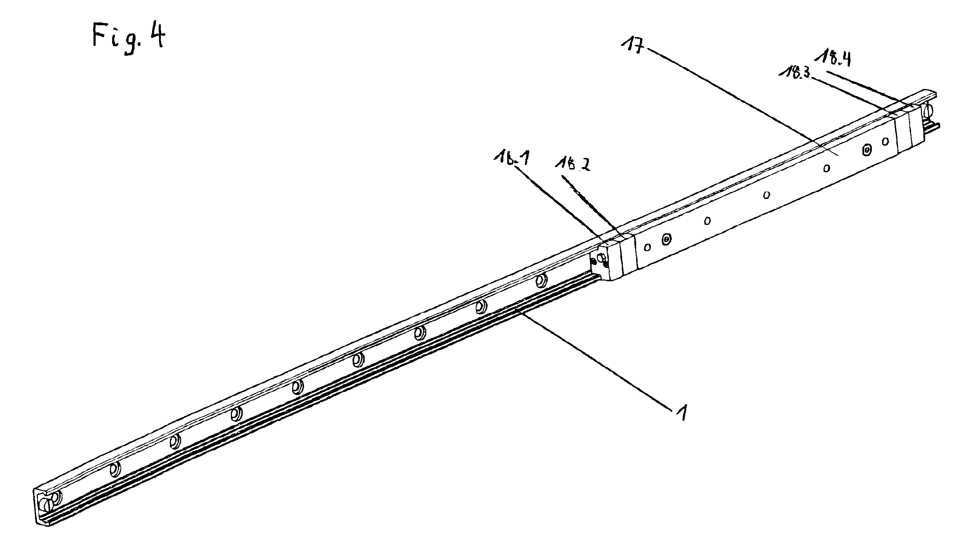

Im Folgenden wird insbesondere anhand der Figuren 4 bis 6 die Linearführung der Tragführung näher erläutert.

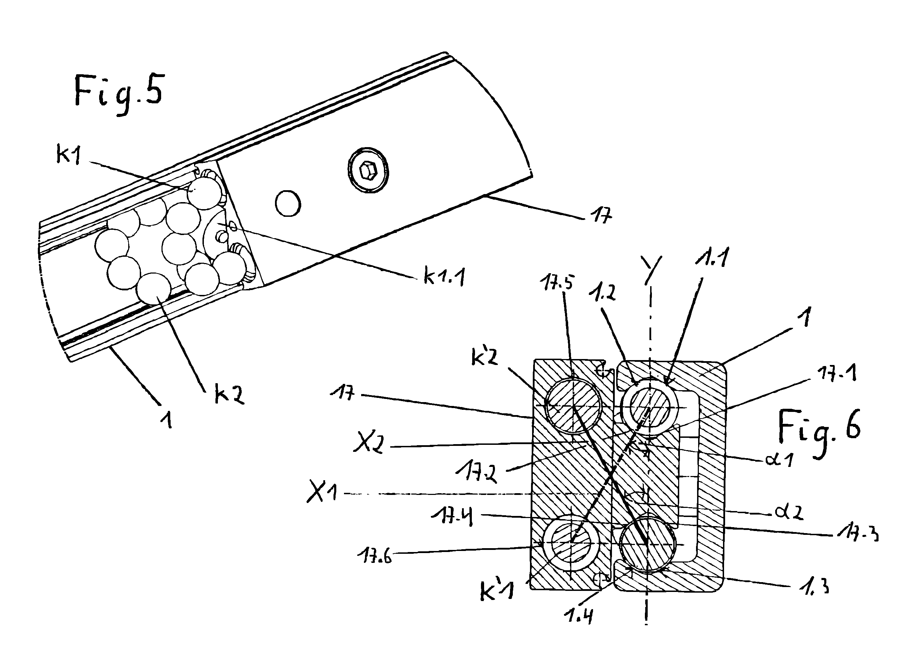

In den Figuren 4 bis 6 ist eine der am Antriebsträger 2 angeordneten Führungsschienen dargestellt, die im Folgenden mit Bezugsziffer 1 bezeichnet wird. In der Führungsschiene 1 läuft ein Läufer 17, an welchem der Führungsschlitten 3A oder 3B befestigt ist. Der Läufer 17 ist in der Führungsschiene 1 über ein Kugelumlauflager gelagert, bei dem zwei nebeneinander liegende und in je zwei Paar einander gegenüberliegenden Laufbahnen 1.1-1.2 bzw. 1.3-1.4 der Führungsschiene sowie 17.1-17.2 bzw. 17.3 - 17.4 des Läufers gelagerte Kugelreihen K1 bzw. K2 die Traglast zwischen der in diesem Fall feststehenden Führungsschiene 1 und dem planparallel hierzu bewegbaren Läufer 17 aufnehmen. Jede Kugelreihe K1 bzw. K2 wird infolge der Relativbewegung zwischen Läufer 17 und Führungsschiene 1 am Ende der Laufbahnen 17.1-17.2 bzw. 17.3 -17.4 des Läufers 17 über ein erstes Paar Umlenkführungen in einen Kanal K'1 bzw. K'2 des Läufers 17 zurückgeführt und am Ende des jeweiligen Kanals über ein zweites Paar von Umlenkführungen wieder zwischen die Laufbahnen 1.1-1.2 und 17.1-17.2 bzw. 1.3-1.4 bzw. 17.3 -17.4 geführt. Von den Umlenkführungen ist eine in Fig. 5 dargestellt und mit K1.1 bezeichnet. Die übrigen Umlenkführungen sind nicht dargestellt und befinden sich innerhalb von Führungsteilen 18.1, 18.2,18.3 und 18.4 (Fig. 4).

Wie Fig. 6 zu entnehmen stehen die Umlenkebenen X1 und X2 der Umlenkführungen jedes Paars in einem Winkel a1 bzw. a2 zu der durch zwei benachbarte Laufbahnen 1.1-1.2 und 1.3-1.4 der Führungsschiene 1 gebildeten Ebene Y. Die Umlenkebenen X1 und X2 schneiden sich und die Umlenkführungen sind deshalb, wie in Fig. 4 angedeutet, hintereinander angeordnet. Der Winkel zwischen den Umlenkebenen X1 und X2 und der Ebene Y liegt zwischen 30 und 70°.

Die Führungsschiene 1 ist als U-förmiges Profil ausgebildet, wobei jeder Schenkel des Profils ein Paar innenliegende und aufeinander zugerichtete Laufbahnen 1.1-1.2 und 1.3-1.4 aufweist. Wie ebenfalls aus Fig. 6 ersichtlich, sind die Laufbahnen 17.1-17.2 und 17.3 - 17.4 an der in die Führungsschiene 1 eingreifenden Außenseite des Läufers 17 angeordnet, so dass die Kugelreihen K1 und K2 jeweils zwischen den Laufbahnpaaren 1.1-1.2 und 17.1-17.2 bzw. 1.3 - 1.4 und 17.3 - 17.4 angeordnet sind. Weitere Einzelheiten des Kugelumlauflagers sind, wie erwähnt, in 10 2006 016 615.9-12 beschrieben.

Die beschriebene Ausbildung des Kugelumlauflagers gestattet es, die Abdichtungen des Lagers in den Läufer 17 in nicht dargestellter Weise zu integrieren, wodurch eine sehr gute Abdichtung des Lagers erreicht werden kann. Dadurch, dass bei dem beschriebenen Kugelumlauflager die Kugeln innerhalb eines geschlossenen Raumes geführt werden, können große Kugeln eingesetzt werden, wodurch hohe Belastungen des Systems aufgenommen werden können.

## Patentansprüche

1. Als Schiebetür oder Schwenkschiebetür ausgebildete Fahrgasttür für Fahrzeuge des öffentlichen Personenverkehrs mit mindestens einem in seiner Längsrichtung verschiebbaren Türblatt und einer Tragführung, wobei das Türblatt in der Tragführung aufgehängt und verschiebbar geführt ist, wobei die Tragführung eine Linearführung aufweist mit mindestens einer Führungsschiene (1), an welcher ein Führungsschlitten geführt ist, an dem über einen Tragarm das Türblatt aufgehängt ist, wobei die Linearführung ein Kugelumlauflager aufweist, bei dem zwei nebeneinanderliegende und in je zwei Paar einander gegenüberliegenden Laufbahnen (1.1- 1.2 und 1.3 -1.4 bzw. 17.1 - 17.2 und 17.3 - 17.4) der Führungsschiene (1) und eines in die Führungsschiene (1) eingreifenden Läufers (17) gelagerte Kugelreihen (K1, K2) die Traglast zwischen der feststehenden Führungsschiene (1) und dem planparallel hierzu bewegbaren, den Führungsschlitten (3A, 3B) tragenden Läufer (17) aufnehmen, **dadurch gekennzeichnet, dass** jede Kugelreihe (K1, K2) infolge einer Relativbewegung zwischen Läufer (17) und Führungsschiene (1) am Ende der Laufbahnen (17.1 - 17.2, 17.3 - 17.4) des Läufers (17) über ein erstes Paar Umlenkführungen (K 1.1) in einen Kanal (K'1, K'2) des Läufers (17) zurückgeführt und am Ende des jeweiligen Kanals über ein zweites Paar von Umlenkführungen wieder zwischen die Laufbahnen geführt wird, wobei die Umlenkebenen (X1, X2) beider Umlenkführungen jedes Paars in einem Winkel (a1, a2) zu der durch zwei benachbarte Laufbahnen der Führungsschiene (1) gebildeten Ebene (Y) verlaufen und sich schneiden und die Umlenkführungen hintereinander angeordnet sind.

2. Fahrgasttür nach Anspruch 1, **dadurch gekennzeichnet, dass** der Winkel (a1, a2) zwischen den Umlenkebenen (X1, X2) und der durch zwei benachbarte Laufbahnen der Führungsschiene (1) gebildeten Ebene (Y) 30 bis 70° beträgt.

3. Fahrgasttür nach einem der beiden Ansprüche 1 oder 2, **dadurch gekennzeichnet, dass** die Führungsschiene (1) aus einem U- oder C-förmigen Profil besteht und jeder Schenkel des Profils ein Paar innenliegende und aufeinander zugerichtete Laufbahnen (1.1 - 1.2 und 1.3-1.4) aufweist.

4. Fahrgasttür nach Anspruch 3, **dadurch gekennzeichnet, dass** der an der Führungsschiene (1) verschiebbar gelagerte Läufer (17) an seiner in die Führungsschiene (1) eingreifenden Seite zwei den Laufbahnen (1.1-1.2 und 1.3 - 1.4) der Führungsschiene (1) zugewandte kongruente Paare von Laufbahnen (17.1 - 17.2 und 17.3 - 17.4) aufweist, und dass zwischen diesen Laufbahnen die Kugelreihen (K1, K2) angeordnet sind.

5. Fahrgasttür nach einem der Ansprüche 1 bis 4 mit zwei gegeneinander in Längsrichtung verschiebbaren Türblättern und zwei Linearführungen, **dadurch gekennzeichnet, dass** die Führungsschienen (1A, 1B) der Linearführungen übereinander an einer Seite eines in horizontaler Querrichtung bewegbaren Antriebsträgers (2) der Tragführung angeordnet sind und die Führungsschlitten (3A, 3B) an den Führungsschienen (1A, 1B) in unterschiedlichen horizontalen Ebenen geführt sind.

6. Fahrgasttür nach Anspruch 5, **dadurch gekennzeichnet, dass** die Türblätter an den Tragarmen (4A, 4B) jeweils über ein Drehgelenk (4.1A, 4.1B) mit horizontaler parallel zu den Führungsschienen verlaufenden Drehachsen pendelnd aufgehängt sind.

## Claims

1. A passenger door for public transport vehicles configured as a sliding door or a pivot sliding door, comprising at least one door leaf, which is displaceable in its longitudinal direction, and a carrier guide, wherein the door leaf is suspended and displaceably guided in the carrier guide, wherein the carrier guide has a linear guide with at least one guide rail (1) on which a guiding carriage is guided, on which the door leaf is suspended by means of a supporting arm, wherein the linear guide comprises a re-circulating ball bearing, in which two ball rows (K1, K2), which are disposed side-by-side and respectively mounted in two pairs of opposite tracks (1.1 - 1.2 and 1.3 - 1.4, and 17.1 - 17.2 and 17.3 - 17.4, respectively) of the guide rail (1) and of a slide (17) latching into the guide rail (1), bear the carrying load between the fixed guide rail (1) and the slide (17), which can be moved in a plane-parallel manner relative thereto and which carries the guide carriage (3A, 3B), **characterised in that** each ball row (K1, K2), as a consequence of a relative movement between the slide (17) and the guide rail (1), is returned at the end of the tracks (17.1 - 17.2, 17.3 - 17.4) of the slide (17) into a channel (K'1, K'2) of the slide (17) via a first pair of redirecting guides (K 1.1) and, at the end of the respective channel, is returned between the tracks via a second pair of redirecting guides, wherein the redirecting planes (X1, X2) of the two redirecting guides of each pair extend at an angle (α1, α2) to the plane (Y) formed by two adjacent tracks of the guide rail (1) and intersect each other, and the redirecting guides are disposed one behind the other.

2. The passenger door according to claim 1, **characterised in that** the angle (α1, α2) between the redirecting planes (X1, X2) and the plane (Y) formed by two adjacent tracks of the guide rail (1) is 30° to 70°.

3. The passenger door according to any one of the claims 1 or 2, **characterised in that** the guide rail (1) is comprised of a U-shaped or C-shaped profile and each leg of the profile has a pair of inner tracks (1.1 - 1.2 and 1.3 - 1.4) that are directed towards each other.

4. The passenger door according to claim 3, **characterised in that** the slide (17) displaceably mounted on the guide rail (1) has, on the side thereof latching into the guide rail (1), two congruent pairs of tracks (17.1 - 17.2 and 17.3 - 17.4) facing towards the tracks (1.1 - 1.2 and 1.3 - 1.4) of the guide rail (1), and that the ball rows (K1, K2) are disposed between these tracks.

5. The passenger door according to any one of the claims 1 to 4, with two door leaves, which can be displaced relative to each other in the longitudinal direction, and two linear guides, **characterised in that** the guide rails (1A, 1B) of the linear guides are disposed one atop the other on a side of a drive carrier (2) of the carrier guide that can be moved in a horizontal transverse direction, and the guide carriages (3A, 3B) are guided on the guide rails (1A, 1B) in different horizontal planes.

6. The passenger door according to claim 5, **characterised in that** the door leaves are suspended in pendulum fashion on the supporting arms (4A, 4B) in each case via a rotating joint (4.1A, 4.1B) with horizontal axes of rotation extending parallel to the guide rails.

## Revendications

1. Porte pour passagers réalisée en tant que porte coulissante ou porte coulissante pivotante pour véhicules du transport en commun, comprenant au moins un ouvrant déplaçable dans sa direction longitudinale et un guide porteur, ledit ouvrant étant suspendu et guidé à coulissement dans le guide porteur, le guide porteur présentant un guidage linéaire avec au moins une glissière (1) sur laquelle est guidé un glissoir sur lequel ledit ouvrant est suspendu via un bras porteur, ledit guidage linéaire présentant un palier à recirculation de billes dans lequel deux rangées de billes (K1, K2) situées l'une à côté de l'autre et logées dans respectivement deux paires de voies de roulement (1.1 - 1.2 et 1.3 - 1.4 ou bien 17.1 - 17.2 et 17.3 - 17.4) situées en vis-à-vis les unes des autres, de la glissière (1) et d'un curseur (17) s'engageant dans la glissière (1), soutiennent la charge entre ladite glissière (1) fixe et ledit curseur (17) déplaçable de manière plane et parallèle à cela et portant ledit glissoir (3A, 3B), **caractérisée par le fait que**, par suite d'un mouvement relatif entre le curseur (17) et la glissière (1), chaque rangée de billes (K1, K2) est ramenée, au bout des voies de roulement (17.1 - 17.2, 17.3 - 17.4) du curseur (17), via une première paire de guides de renvoi (K 1.1), dans un canal (K'1, K'2) du curseur (17) et est guidée, au bout du canal respectif, via une deuxième paire de guides de renvoi, à nouveau entre les voies de roulement, les plans de renvoi (X1, X2) des deux guides de renvoi de chaque paire s'étendant à un angle (α1, α2) par rapport au plan (Y) formé par deux voies de roulement voisines de la glissière (1) et se coupant, et les guides de renvoi étant disposés les uns derrière les autres.

2. Porte pour passagers selon la revendication 1, **caractérisée par le fait que** l'angle (α1, α2) entre les plans de renvoi (X1, X2) et le plan (Y) formé par deux voies de roulement voisines de la glissière (1) est compris entre 30 et 70°.

3. Porte pour passagers selon l'une quelconque des deux revendications 1 ou 2, **caractérisée par le fait que** la glissière (1) est réalisée dans un profilé en U ou en C et que chaque branche du profilé présente une paire de voies de roulement (1.1 - 1.2 et 1.3 - 1.4) situées à l'intérieur et dirigées l'une vers l'autre.

4. Porte pour passagers selon la revendication 3, **caractérisée par le fait que** le curseur (17) logé à coulissement sur la glissière (1) présente, sur son côté s'engageant dans la glissière (1), deux paires congrues de voies de roulement (17.1 - 17.2 et 17.3 - 17.4) montrant vers les voies de roulement (1.1 - 1.2 et 1.3 - 1.4) de la glissière (1), et que les rangées de billes (K1, K2) sont disposées entre ces voies de roulement.

5. Porte pour passagers selon l'une quelconque des revendications 1 à 4, comprenant deux ouvrants déplaçables l'un contre l'autre dans la direction longitudinale et deux guidages linéaires, **caractérisée par le fait que** les glissières (1A, 1B) des guidages linéaires sont disposées l'une sur l'autre sur un côté d'un support d'entraînement (2) du guide porteur, qui est déplaçable dans la direction transversale horizontale, et les glissoirs (3A, 3B) sont guidés sur les glissières (1A, 1B) dans des plans horizontaux différents.

6. Porte pour passagers selon la revendication 5, **caractérisée par le fait que** les ouvrants sont suspendus à pendule sur les bras porteurs (4A, 4B) respectivement via un joint rotatif (4.1A, 4.1B) ayant des axes de rotation horizontaux s'étendant parallèlement aux glissières.
